# EUROPEAN PATENT SPECIFICATION

(11) **EP 4 401 167 B1**
(45) Date of publication and mention of the grant of the patent: **25.11.2026**
(21) Application number: 23872812.5
(22) Date of filing: 23.08.2023
(51) Int. Cl.: H01M 4/36, C01G 53/00, H01M 4/525, H01M 4/505, H01M 4/02, H01M 10/0562, H01M 10/0585, C01G 53/50, H01M 10/052, H01M 4/131, H01M 4/62

(54) **METHOD FOR PREPARING POSITIVE ELECTRODE ACTIVE MATERIAL FOR LITHIUM SECONDARY BATTERY AND POSITIVE ELECTRODE ACTIVE MATERIAL PREPARED THEREBY**
VERFAHREN ZUR HERSTELLUNG EINES POSITIVELEKTRODENAKTIVMATERIALS FÜR EINE LITHIUMSEKUNDÄRBATTERIE UND DAMIT HERGESTELLTES POSITIVELEKTRODENAKTIVMATERIAL
PROCÉDÉ DE PRÉPARATION D'UN MATÉRIAU ACTIF D'ÉLECTRODE POSITIVE POUR UNE BATTERIE SECONDAIRE AU LITHIUM ET MATÉRIAU ACTIF D'ÉLECTRODE POSITIVE AINSI PRÉPARÉ

(30) Priority: 30.09.2022 KR 20220125099
(43) Date of publication of application: 17.07.2024
(73) Proprietor: LG Energy Solution, Ltd., Seoul 07335 (KR); L & F Co., Ltd., Daegu 42712 (KR)
(72) Inventor: LEE, Daejin, Daejeon 34122 (KR); HAH, Hoejin, Daejeon 34122 (KR); LIM, Sunhye, Daegu 42712 (KR); JUNG, Hyeyun, Daegu 42712 (KR); SHIN, Jihyun, Daegu 42712 (KR); PARK, Jaeyeong, Daegu 42712 (KR)
(74) Representative: Goddar, Heinz J.
(86) International application number: PCT/KR2023/012467
(87) International publication number: WO 2024/071690

(56) References cited:
- WO-A1-2020/069882
- WO-A1-2022/203434
- KR-A- 20170 076 222
- KR-A- 20210 111 930
- KR-B1- 101 808 373

## Description

### [Technical Field]

This application claims the benefit of priority based on Korean Patent Application No. 10-2022-0125099 filed on September 30, 2022.

The present invention relates to a method for producing a positive electrode active material for a lithium secondary battery, and a positive electrode active material manufactured thereby.

### [Background Art]

A lithium ion secondary battery with high energy density, low self-discharge rate, and long lifetime is suitable to meet the demand for high-capacity batteries. On the other hand, since a lithium ion secondary battery has the structure where the negative and positive electrodes are separated by a separating film, a short circuit can occur if the separating film is damaged due to deformation or external impact, and therefore, there is the stability issue against overheating, so research is being conducted to improve it.

All-solid-state batteries have been presented as a solution to overcome the safety concerns of lithium ion secondary batteries. Unlike conventional batteries that use liquid electrolyte, all-solid-state batteries have an electrolyte layer containing solid electrolyte. The solid electrolyte in an all-solid-state battery may have a positive electrode layer and a negative electrode layer that contain solid electrolyte on both sides. Each electrode in an all-solid-state battery may be coupled to a current collector.

Since all-solid-state batteries use a solid electrolyte instead of a liquid electrolyte, there is very little possibility of evaporation of the liquid due to temperature changes or leakage of the electrolyte due to external shocks, which makes the batteries safe from explosions or fires. All-solid-state batteries also have reduced weight and volume because they do not require components for leakage and explosion prevention.

All-solid-state batteries are categorized into oxide-, polymer-, or sulfide-based depending on the raw material of the solid electrolyte. Among them, sulfide-based all-solid-state batteries have attracted much attention due to their higher lithium ion conductivity (10⁻² S/cm) than other batteries and excellent temperature stability.

The method of manufacturing the positive and negative electrodes of an all-solid-state battery is similar to the method of producing the positive and negative electrodes of a conventional lithium ion battery. Active materials, conductive materials, and binder solid particles are mixed with a solvent in a certain ratio to form a mixture slurry having low fluidity, and the slurry is coated in the form of a thin film on a metal current collector, dried, and pressed. In an all-solid-state battery, solid electrolytes are mixed in the slurry preparation stage.

Compared to liquid electrolytes, solid electrolytes have a difficulty forming interfaces with active materials. Since the binder interferes with the formation of the interface between the active material and the solid electrolyte, the electrical resistance significantly increases. This leads to a drop in power output. Even if a material with high ionic conductivity is used as a solid electrolyte, the crystallized solid electrolyte must be ground into fine particles in order to mix it into the electrode slurry. In addition, since a solid electrolyte is mixed with a solvent, conductivity degradation occurs due to the material constraints rather than the inherent properties of the material. It is known that the ionic conductivity of batteries using solid electrolytes (10⁻⁵ S/cm to 10⁻² S/cm) is lower than that of batteries using liquid electrolytes (10⁻² S/cm).

It is believed that all-solid-state batteries has low ionic conductivity because the batteries cannot form triplets in the electrode. The triple point is the point where the electrochemical reaction occurs in the electrode, so it is desirable to form many triple points within the electrode so that many electrochemical reactions can occur.

The simultaneous mixing of electrode active material, solid electrolyte, conductive material, and binder to form a slurry results in either dead active material isolated by the conductive material within the electrode structure, or dead solid electrolyte isolated by the active material. When the isolated solid electrolyte is formed, the active material and the solid electrolyte are unnecessarily wasted. In addition, the migration path of the lithium ions is blocked, resulting in the additional problem of reduced energy density.

Among the methods of manufacturing an all-solid-state battery, a method is known in which the constituent powders of the battery are sequentially placed in a cylindrical mold and pressurized to combine a current collector on the positive and negative electrodes. The method does not bring out uniform deposition on the positive electrode (layer) on the electrolyte layer. The method fails to form a uniform current distribution in the positive electrode, and deviations in current density occurs, which may cause performance degradation of the battery.

In addition to uneven deposition in the positive electrode, uneven distribution of the composition in the positive electrode can also be problematic. Uneven distribution of the positive electrode composition causes localized overcharging of the electrode, degradation of the active material, and dendrite growth in the lithium metal. This accelerates the degradation of charge and discharge life of the battery.

Accordingly, when manufacturing an all-solid-state battery, the contact surface between the active material, solid electrolyte and conductive material must be increased to ensure an optimal ion conduction pathway. It is also important to ensure that the electrode compound is uniformly distributed over the current collector and that the materials in the electrode compound have a uniform and even distribution.

### [Prior art reference]

### [patent reference]

(Patent reference 1) Japanese Patent Laid-open Publication No. 2012-234648 (Publication Date: November 29, 2012)
(Patent reference 2) Korean Patent Laid-open Publication No. 2022-0045460 (Publication Date: April 12, 2022)

Further related background art can be found in patent references KR20210111930 and WO2022203434.

### [Disclosure]

### [Technical Problem]

An object of the present invention is to provide a method of manufacturing a positive electrode active material for a lithium secondary battery in which a coating layer comprising a niobium-based compound can be uniformly and effectively introduced on the surface of the positive electrode active material.

Another object of the present invention is to provide a positive electrode active material for a lithium secondary battery prepared by the above method.

### [Technical Solution]

One embodiment of the present invention provides a method of manufacturing a positive electrode active material for a lithium secondary battery, comprising the steps of (a) mixing a positive electrode active material capable of reversible adsorption and release of lithium ions, and a solvent to produce a positive electrode active material dispersion; (b) adding and mixing a raw coating material comprising lithium (Li) and niobium (Nb) to produce a coating solution comprising a niobium-based compound; (c) adding to the positive electrode active material dispersion of step (a), the coating solution of step (b) to form a coating layer on the surface of the positive electrode active material; and (d) removing a solvent by pressing filtering the product of step (c).

Step (a) may indicate mixing a positive electrode active material capable of reversible adsorption and release of lithium ions with an organic solvent, and then further adding an aqueous solvent to the mixture.

In step (a), hydrophilic functional groups may be introduced to the surface of the positive electrode active material by further adding the aqueous solvent.

The positive electrode active material dispersion may comprise from 10 to 50 wt% solids, based on the total weight thereof.

The surface coating layer of the positive electrode active material may comprise 1.0 to 1.2 wt% of a niobium-based compound, based on the total weight of the solids in the positive electrode active material dispersion.

The aqueous solvent may be added in an amount of 1.2 to 1.4 wt%, based on the total weight of the solids in the dispersion of the positive electrode active material.

The pressing filtration may be carried out by applying a pressure of 0.3 to 0.5 MPa.

The thickness of the coating layer may be from 10 to 30 nm.

After step (d), the method may further comprise the step of drying the solvent-removed product at 80 to 120 °C.

Another embodiment of the present invention provides a positive electrode active material for a lithium secondary battery prepared by the above manufacturing method.

### [Effects of the Invention]

An object of the present invention is to provide a method of manufacturing a positive electrode active material for a lithium secondary battery, in which a niobium-based compound can be uniformly and effectively coated on the surface of the positive electrode active material by introducing hydrophilic functional groups via an aqueous solvent to the surface of the positive electrode active material during the formation of a coating layer comprising the niobium-based compound to reduce the reactivity between the sulfide-based solid electrolyte and the positive electrode active material of a lithium secondary battery, particularly an all-solid-state battery.

In addition, the present invention has the effect of solving the problem that the niobium-based compound cannot be introduced to the surface of the positive electrode active material, but separated therefrom due to the removal of residual solvent with a high heat as a conventional method, by removing the residual solvent by pressing filtering the positive electrode active material dispersion formed with a coating layer comprising the niobium-based compound, instead of removing the residual solvent with a high heat as a conventional method.

### [Description of Drawings]

FIG. 1 is an SEM image of a positive electrode active material for a lithium secondary battery according to Example 1 of the present invention.
FIG. 2 is an SEM image of a positive electrode active material for a lithium secondary battery according to Comparative Example 1 of the present invention.
FIG. 3 is an SEM image of a positive electrode active material for a lithium secondary battery according to Comparative Example 3 of the present invention.
FIG. 4 is an SEM image of a positive electrode active material for a lithium secondary battery according to Comparative Example 7 of the present invention.
FIG. 5 is an energy dispersive X-ray (EDX) image of the positive electrode active material of Example 1 of the present invention.
FIG. 6 is an energy dispersive X-ray (EDX) image of the positive electrode active material of Comparative Example 1 of the present invention.
FIGS. 7 and 8 are field emission transmission electron microscopy (FE-TEM) images of the positive electrode active material of Example 1 of the present invention.

### [Best Mode]

Embodiments of the present invention are described hereinafter. It is noted that the terms and words used in this specification and claims are not to be construed in their ordinary or dictionary sense, but rather in a sense and concept consistent with the technical idea of the present invention, based on the principle that the inventor(s) may properly define the concept of a term to best describe his/her invention. Accordingly, it is to be understood that the compositions described in the embodiments provided in the specification are only the most preferred embodiments of the present invention and are not exhaustive of the technical ideas of the present invention, and that there may be various equivalents and variations that may substitute for them at the time of filing.

Throughout the specification, when a part "includes" a component, it means that a part may further include other components, not excludes other components, unless otherwise stated.

The term "nano" used herein means nanoscale and includes sizes of 1 µm or less.

Hereinafter, a method of manufacturing a positive electrode active material for a lithium secondary battery according to one embodiment is described.

The present invention relates to a method of manufacturing a positive electrode active material for a lithium secondary battery in which a niobium-based compound can be uniformly and effectively coated on the surface of the positive electrode active material.

An all-solid-state battery developed to improve the stability problem of lithium ion secondary batteries includes a positive electrode, a negative electrode and a solid electrolyte, wherein a sulfide-based solid electrolyte with high lithium ion conductivity and excellent stability is mainly used for the positive electrode.

There are problems that the sulfide-based solid electrolyte and the positive electrode active material generate an interaction therebetween at the interface to generate a resistance material that hinders the smooth operation of the all-solid-state battery, and the initial capacity and operation efficiency of the all-solid-state battery are reduced by the generated resistance material.

To solve these problems, research has been conducted to improve the performance of all-solid-state batteries by reducing the reactivity with sulfide-based solid electrolytes by coating the positive electrode active material of all-solid-state batteries with lithium niobate (LiNbO₃).

However, in the course of coating the positive electrode active material with lithium niobate, a problem was found that, when the lithium niobate was subjected to heat treatment in a high-temperature environment to evaporate the organic solvent contained in the coating solution, the lithium niobate was not fully coated on the surface of the positive electrode active material and was separated therefrom, resulting in forming an uneven coating layer.

Accordingly, in order to prevent side reactions of the positive electrode active material with a solid electrolyte of an all-solid-state battery, especially a sulfide-based solid electrolyte, the present inventors have discovered a method for manufacturing a positive electrode active material for a lithium secondary battery in which a coating layer comprising a niobium-based compound is formed on the surface of the positive electrode active material, but by first introducing hydrophilic functional groups to the surface of the positive electrode active material by introducing an aqueous solvent, the niobium-based compound can be uniformly and effectively coated on the surface of the positive electrode active material, and completed the present invention.

Furthermore, the present invention was also completed by the discovery that, by removing the residual solvent by pressing filtering the positive electrode active material dispersion in which a coating layer comprising the niobium-based compound is formed, instead of removing the residual solvent by using a high heat as a conventional method, the problem that the niobium-based compound cannot be introduced to the surface of the positive electrode active material by removing the residual solvent by using a high heat as a conventional method, and is separated therefrom can be solved.

A method of manufacturing a positive electrode active material for a lithium secondary battery according to one embodiment of the present invention comprises the steps of (a) mixing a positive electrode active material capable of reversible adsorption and release of lithium ions, and a solvent to produce a positive electrode active material dispersion; (b) adding and mixing a coating material comprising lithium (Li) and niobium (Nb) to produce a coating solution comprising a niobium-based compound; (c) adding to the positive electrode active material dispersion of step (a), the coating solution of step (b) to form a coating layer on the surface of the positive electrode active material; and (d) pressing filtering the product of step (c) to remove a solvent.

First, a positive electrode active material dispersion is prepared by mixing a positive electrode active material capable of reversible adsorption and release of lithium ions and a solvent. (Step (a))

The positive electrode active material capable of reversible adsorption and release of lithium ions can be used without limitation as long as it can be used as a positive electrode active material of a lithium ion secondary battery. For example, the positive electrode active material may be, but is not limited to, a layered compound such as lithium cobalt oxides (LiCoO₂), lithium nickel oxides (LiNiO₂), or a compound substituted with one or more transition metals; lithium manganese oxides of Li₁₊ₓMn₂₋ₓO₄ (wherein x is 0 to 0.33), LiMnO₃, LiMn₂O₃ or LiMnO₂; lithium copper oxides (Li₂CuO₂); vanadium oxides, such as LiV₃O₈, LiV₃O₄, V₂O₅ or Cu₂V₂O₇; lithium nickel oxides represented by LiNi₁₋ₓMₓO₂ (wherein M is Co, Mn, Al, Cu, Fe, Mg, B or Ga, and comprises one or more therefrom, and x is 0.01 to 0.3), such as LiN_{0.8}Co_{0.1}M_{0.1}O₂; lithium manganese complex oxides represented by LiMn₂₋ₓMₓO₂ (wherein M is Co, Ni, Fe, Cr, Zn or Ta, wherein x is 0.01 to 0.1) or Li₂Mn₃MO₈ (wherein M is Fe, Co, Ni, Cu or Zn); lithium manganese complex oxides with a spinel structure represented by LiNiₓMn₂₋ₓO₄; LiMn₂O₄ in which the Li is partially replaced by an alkaline earth metal ion; disulfide compounds; or Fe₂(MoO₄)₃. The positive electrode active material may typically be comprised in an amount of 70 to 95 wt%, 75 to 95 wt%, or 80 to 95 wt%, based on 100 wt% of the electrode layer.

In one embodiment of the present invention, step (a) may comprise mixing a positive electrode active material capable of reversible adsorption and release of lithium ions and an organic solvent, and then further adding an aqueous solvent to the mixture.

The organic solvent may be used without special restriction as long as it is capable of effectively dispersing the positive electrode active material, and an alcohol-based solvent such as ethanol or isopropyl alcohol is preferably used.

By further adding aqueous solvent to the mixture of the positive electrode active material and the organic solvent, hydrophilic functional groups can be introduced on the surface of the positive electrode active material.

In the case of the niobium-based compound comprised in the solution forming a positive electrode active material coating layer described hereinafter, it induces a "hydrolysis-condensation" reaction with the hydrophilic functional groups introduced by the aqueous solvent, which plays a role in enabling the niobium-based compound to be effectively coated on the surface compared to the positive electrode active material in which no hydrophilic functional groups are introduced.

This can be understood that an organic solvent has priority in dispersing a positive electrode active material, and has a reduced ability to introduce hydrophilic functional groups to the surface of the positive electrode active material compared to an aqueous solvent.

The aqueous solvent is not particularly limited, provided that it does not affect the properties of the positive electrode active material, but deionized water, ultrapure water, or distilled water can be specifically used.

The hydrophilic functional groups introduced to the surface of the positive electrode active material by the aqueous solvent may be, for example, a hydroxyl group (-OH).

In the process of preparing a positive electrode active material dispersion, if the positive electrode active material is first mixed with an aqueous solvent instead of an organic solvent, there is a problem that the positive electrode active material cannot be uniformly dispersed in the aqueous solvent and may agglomerate, and the hydrophilic functional groups may not be effectively introduced to the surface of the positive electrode active material, so it is preferable to prepare the positive electrode active material dispersion by first mixing the positive electrode active material with the organic solvent and then adding the aqueous solvent thereto.

In one embodiment of the present invention, the positive electrode active material dispersion may comprise from 10 to 50 wt% solids, based on the total weight thereof. For example, the solids content may be 20 to 50 wt%, 30 to 50 wt%, preferably 40 to 50 wt%, based on the total weight of the positive electrode active material dispersion.

If the content of solids in the positive electrode active material dispersion is less than 10 wt%, there is a problem that the capacity of the loading amount of the positive electrode active material in the electrode is reduced, which may lead to a reduction of the capacity of the lithium secondary battery, and if the content of solids exceeds 50 wt%, there is a problem that agglomeration of solids may occur due to uneven stirring during the preparation of the positive electrode active material dispersion.

In one embodiment of the present invention, the aqueous solvent may be introduced in an amount of 1.2 to 1.4 wt%, based on the total weight of the solids in the dispersion of the positive electrode active material. For example, the content of the aqueous solvent may be comprised in an amount of 1.25 to 1.4 wt%, 1.3 to 1.4 wt%, preferably 1.34 to 1.4 wt%, based on the total weight of solids in the positive electrode active material dispersion.

If the amount of aqueous solvent is less than 1.2 wt%, it may be difficult to effectively introduce hydrophilic functional groups to the surface of the positive electrode active material, so the coating layer of the niobium-based compound may not be properly formed, and if the amount exceeds 1.4 wt%, a gelation may occur, resulting in agglomeration of the positive electrode active material and formation of an uneven coating layer, so the amount of aqueous solvent is appropriately adjusted within the above ranges.

Next, the raw coating material including lithium (Li) or niobium (Nb) is added and mixed to prepare a coating solution including a niobium-based compound (step (b)).

An aqueous solvent such as deionized, ultrapure or distilled water, or an organic solvent such as ethanol or isopropyl alcohol can be used as a solvent for preparing the coating solution.

As the raw coating material, a raw material comprising lithium or niobium that can be completely dissolved in an aqueous solvent or an organic solvent can be used, more preferably lithium ethoxides or niobium acids. The amount of raw material to be introduced is preferably 0.05 M to 0.3 M of lithium element and niobium element, respectively, on the basis of molarity (M), which refers to the molar ratio of elements per liter, more preferably 0.1 M to 0.2 M of solution concentration.

In the process of preparing a coating solution, even if the raw coating material is dissolved in the solvent, a local reprecipitation reaction may occur and niobium oxide (Nb₂O₅) precipitates may be formed if the hydrogen ion concentration and reaction temperature are not finely controlled, so the hydrogen ion concentration, reaction temperature, and reaction time are controlled within a desirable range.

Next, the coating solution of step (b) is added to the positive electrode active material dispersion of step (a) to form a coating layer on the surface of the positive electrode active material (step (c)).

The coating solution of step (b) may be added in a trickle until the formation of the coating layer on the surface of the positive electrode active material is completed, for example, the coating solution may be added at a rate of 1 mL/min to 20 mL/min.

As a result of the introduction of hydrophilic functional groups on the surface of the positive electrode active material due to the aqueous solvent during the preparation of the positive electrode active material dispersion, the niobium-based compound in the coating solution can combine with the hydrophilic functional groups on the surface of the positive electrode active material to effectively form a uniform coating layer.

In one embodiment of the present invention, the surface coating layer of the positive electrode active material may comprise 1.0 to 1.2 wt% of a niobium-based compound, based on the total weight of the solids in the positive electrode active material dispersion.

If the content of a niobium-based compound is less than 1.0 wt%, it may be difficult to form a coating layer and reduce the side reaction between the sulfide-based solid electrolyte and the positive electrode active material, and if the content is more than 1.2 wt%, the niobium-based compound may agglomerate or form an uneven coating layer on the surface of the positive electrode active material, so the content of the niobium-based compound is appropriately adjusted within the above range.

Next, the coating solution is added to the positive electrode active material dispersion, and the product with a coating layer formed on the surface of the positive electrode active material is pressed and filtered to remove the solvent (step (d)).

When the product of the positive electrode active material in which a coating layer of the niobium-based compound is formed is pressed and filtered, a heat is not generated compared to the case in which the residual solvent is removed by a conventional separate heat treatment process, so that the detachment of the niobium-based compound in the coating layer can be prevented, and thus the formation of an uneven coating layer can be also prevented. Through the pressing filtration process, the excess organic solvent added to prepare the positive electrode active material dispersion and the excess aqueous solvent added to provide hydrophilic functional groups to the surface of the positive electrode active material can be largely removed.

The pressing filtration can be performed using techniques known in the art. As devices for pressing filtration, pressing filters, filter presses, screw presses, V-shaped disk presses, and the like can be used.

The pressing filtration may be carried out by applying a predetermined pressure using the above devices, for example, by applying a pressure of 0.3 to 0.5 MPa. If the pressure of the pressing filtration is less than 0.3 MPa, an organic solvent may remain in the product in which a coating layer is formed on the positive electrode active material, and lithium niobates may not be completely coated on the positive electrode active material and may be separated therefrom, resulting in forming an uneven coating layer.

In one embodiment of the present invention, after the pressing filtration step (step (d)), the step of drying the product from which the solvent has been removed may be further comprised.

Since, in the positive electrode active material product with the coating layer formed in step (d), most of the solvent is removed by pressing filtration, even in the additional drying step, the niobium-based compound formed on the surface of the positive electrode active material is not separated therefrom.

The drying process is a process for removing residual solvents and moisture contained in the positive electrode active material on which the coating layer is formed, and can be performed, for example, in a vacuum oven at 80 to 120 °C for 8 to 16 hours. Drying methods include, for example, drying by warm air, hot air or low humidity air, vacuum drying, or irradiation with (far) infrared or electromagnetic radiation. After the drying process, a cooling process may be further comprised, wherein the cooling process may be slow cooling to room temperature to ensure that the coating layer on the surface of the positive electrode active material is well formed.

The positive electrode active material prepared by the above steps can improve the performance of an all-solid-state battery by reducing the reactivity with a sulfide-based solid electrolyte by forming a coating layer comprising a niobium compound on the surface thereof.

The thickness of the coating layer comprising the niobium compound may be, for example, from 10 to 30 nm, for example, from 15 to 25 nm, and preferably from 20 to 25 nm. If the thickness of the coating layer is less than 10 nm, the effect of reducing the reactivity with the solid electrolyte by the niobium compound may be reduced, and if the thickness of the coating layer is greater than 30 nm, it may affect the absorption and release of lithium ions, or the coating layer may act as a resistance and thus act as a resistance of the all-solid-state battery, so the thickness is appropriately adjusted in the above ranges.

Another embodiment of the present invention provides a positive electrode active material for a lithium secondary battery prepared by the method of preparing the positive electrode active material.

Another embodiment of the present invention provides a lithium secondary battery comprising a positive electrode active material prepared by the above method.

The lithium secondary battery may comprise a positive electrode, a negative electrode, and an electrolyte interposed between these electrodes, and in one embodiment, the lithium secondary battery may be an all-solid-state battery comprising a solid electrolyte film.

The positive electrode may comprise a current collector and a positive electrode active material layer formed on at least one side of the current collector, wherein the positive electrode active material layer may comprise a positive electrode active material, a solid electrolyte and a conductive material. Further, in one specific embodiment of the present invention, the positive electrode active material layer may further comprise a binder material. The addition of the binder material may increase the adhesion of the positive electrode active material layer to the current collector and/or the solid electrolyte layer, and independently or in conjunction therewith, may also help to improve the adhesion between the components comprised in the positive electrode active material.

The positive electrode active material can be used without limitation as long as it can be used as a positive electrode active material of a lithium ion secondary battery, and the specific description thereof is the same as described above, so the specific description is omitted herein.

The solid electrolyte included in the positive electrode may be one or more selected from, for example, Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ or Li₂S-GeS₂-ZnS, Li₆PS₅Cl, Li₆PS₅Br or Li₆PS₅ClₓBr₍₁₋ₓ₎ (wherein x is 0.1≤x≤0.9) and combinations thereof, and may preferably include Li₆PS₅Cl, Li₆PS₅Br or Li₆PS₅ClₓBr₍₁₋ₓ₎ (wherein x is 0.1≤x≤0.9) with the Argyrodite structure or combinations thereof. The solid electrolyte may typically be comprised in a range of 1 to 30 wt%, 1 to 20 wt%, or 1 to 15 wt%, based on 100 wt% of the electrode layer.

The conductive material is not particularly limited as long as it has conductivity without causing any chemical changes in the battery, for example, graphite such as natural graphite or artificial graphite; carbon black such as carbon black, acetylene black, ketjen black, channel black, furnace black, lamp black, summer black, etc; conductive fibers such as carbon fibers such as vapor grown carbon fiber (VGCF) or metal fibers; metal powders such as carbon fluorides, aluminum or nickel powders; conductive whiskers such as zinc oxides or potassium titanates; conductive metal oxides such as titanium oxides; the conductive materials, such as polyphenylene derivatives, or mixtures of one or two or more selected therefrom. The conductive material may typically be comprised in a range of 1 to 10 wt%, or 1 to 5 wt%, based on 100 wt% of the electrode layer.

The binder is not particularly limited as long as it is a component that aids in the bonding of the active material to the conductive material or the bonding to the current collector, e.g., polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber, fluorinated rubber, or various copolymers thereof. The binder may typically be comprised in a range of 1 to 20 wt%, or 1 to 10 wt%, based on 100 wt% of the electrode layer.

The negative electrode may be a negative current collector, or comprise a negative electrode active material layer formed on the surface of the current collector.

The negative electrode current collector is not particularly limited as long as it is conductive without causing any chemical changes in the all-solid-state battery, and for example, copper, stainless steel, aluminum, nickel, titanium, calcined carbon, copper or stainless steel whose surface is treated with carbon, nickel, titanium, silver, etc., or an aluminum-cadmium alloy may be used. Also, like the positive electrode current collector, the negative electrode current collector may be in various forms, such as a film, sheet, foil, net, porous material, foam or nonwoven material with fine irregularities formed on the surface thereof.

The negative electrode active material layer may comprise one or more elements selected from alkali metals, alkaline earth metals, 3B group metals and transition metals. In a specific embodiment of the present invention, non-limiting examples of the alkali metal include at least one metal selected from the group consisting of lithium (Li), sodium (Na), potassium (K), rubidium (Rb), cesium (Cs) and francium (Fr), preferably lithium. Alternatively, the negative electrode may be a lithium metal or a lithium alloy as the negative electrode active material. The lithium alloy may be an alloy comprising lithium and at least one metal selected from the group consisting of Na, K, Rb, Cs, Fr, Be, Mg, Ca, Sr, Ba, Ra, Al and Sn. In a specific embodiment of the present invention, the negative electrode may be laminated with a negative electrode current collector and a lithium metal thin film having a predetermined thickness bonded to each other by pressing.

In one embodiment of the present invention, the negative and/or positive electrode may further comprise various additives for the purpose of complementing or improving physicochemical properties thereof. The additives may include one or more of, but are not limited to, oxidation stable additives, reduction stable additives, flame retardants, heat stabilizers or antifogging agents.

Each of the negative and positive electrodes may use cyclic aliphatic hydrocarbons such as cyclopentane, cyclohexane or mixtures thereof, aromatic hydrocarbons such as toluene, xylene or mixtures thereof, or aromatic hydrocarbon solvents such as cyclopentane, cyclohexane or mixtures thereof, or mixtures of one or two or more of the aliphatic hydrocarbon solvents and the aromatic hydrocarbon solvents, as an organic solvent in the preparation of the electrode slurry. The organic solvent can be selected and used with appropriate drying rates and environmental conditions.

The solid electrolyte film may be provided between the negative and positive electrodes.

The solid electrolyte film may comprise a solid electrolyte and a binder.

The solid electrolyte included in the solid electrolyte film includes, for example, Li₂S-P₂S₅, Li₂S-LiI-P₂S₅, Li₂S-P₂S₅-LiCl, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ or Li₂S-GeS₂-ZnS, Li₆PS₅Cl, Li₆PS₅Br or Li₆PS₅ClₓBr₍₁₋ₓ₎ (wherein x is 0.1≤x≤0.9) and combinations thereof. The solid electrolyte may typically comprise a range of 80 to 100 wt%, 90 to 100 wt%, or 95 to 100 wt%, based on 100 wt% of the solid electrolyte film.

The binder included in the solid electrolyte membrane is not particularly limited, as long as it is a component that assists the binding of the solid electrolyte, for example, polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene butadiene rubber, fluorinated rubber, or various copolymers thereof. The binder may typically be included in a range of 1 to 20 wt%, or 1 to 10 wt%, based on 100 wt% of the solid electrolyte membrane.

The ionic conductivity of the solid electrolyte film may be, for example, greater than 5×10⁻³ S/cm and less than or equal to 1×10⁻¹ S/cm. If the ionic conductivity of the solid electrolyte film is less than 5×10⁻³ S/cm, it does not provide lithium ion conduction between the negative and positive electrodes in the all-solid-state battery structure to a main pathway, making it difficult to implement basic cell performance. Although the higher the ionic conductivity of the solid electrolyte film, the more advantageous it is, it is preferably limited to a range of 1×10⁻¹ S/cm or less, based on comprehensive consideration of the characteristics of the solid electrolyte, limitation of performance to be implemented, and atmosphere stability.

Hereinafter, Examples of the present invention are provided. However, Examples are presented to specifically illustrate or describe the present invention, but the present invention is not limited thereto. In addition, even matters not described herein are sufficiently to be inferred by those skilled in the art and are omitted herein.

### Examples

### Example 1

(1) In a vessel with a diameter of 30 cm, 6 kg of Li(NiₓCo_{y}Mn_{z})O₂ as a positive electrode active material and 4.0 L of ethanol were added and dispersed, and then 80.4 g of distilled water was added and stirred at a speed of 200 rpm for 20 minutes to prepare a positive electrode active material dispersion.
(2) Next, a lithium precursor, lithium ethoxide (CH₃CH₂OLi), was dissolved in ethanol for 1 hour, and then a niobium precursor, niobium pentaethoxide (Nb(OCH₂CH₃)₅), was added to this solution to prepare a coating solution. The coating solution was mixed so that the niobium compound was comprised in an amount of 1.0 wt% based on the total weight of the solids in the positive electrode active material dispersion.
(3) Next, the coating solution was added to the positive electrode active material dispersion to form a coating layer on the surface of the positive electrode active material. The coating solution was dropped into the container containing the positive electrode active material dispersion at a rate of 2 to 10 mL/min.
(4) The positive electrode active material on which the coating layer was formed was obtained, and the residual solvent was removed by pressing it through a pressure filter at a pressure of 0.5 MPa.
(5) The positive electrode active material with the solvent removed was collected, placed in a vacuum oven, and dried at 80 °C for 12 hours to prepare a positive electrode active material for a lithium secondary battery with a surface coating layer of lithium niobate (LiNbO₃).

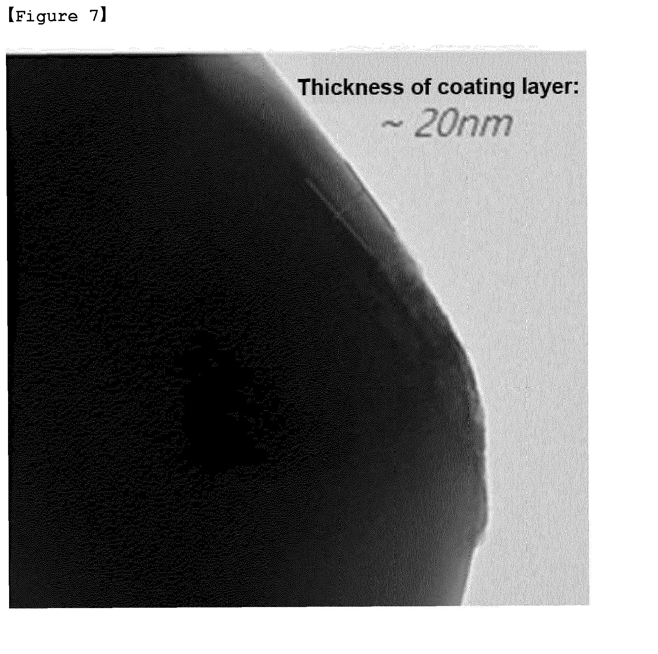

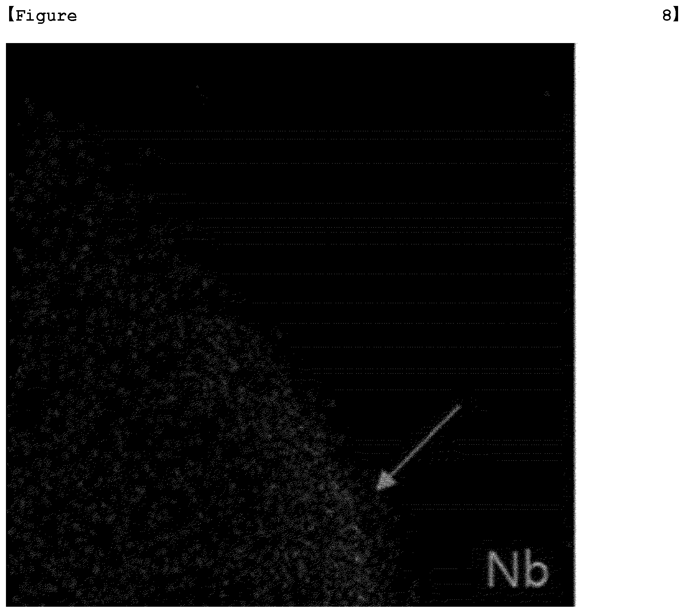

Referring to FIG. 7, in which the prepared positive electrode active material is observed by a field emission transmission electron microscope (FE-TEM), it can be seen that a coating layer containing a niobium-based compound is formed on the surface of the positive electrode active material with a thickness of about 20 nm. Also, referring to FIG. 8, it can be seen that the coating layer on the surface of the positive electrode active material contains a niobium-based compound.

### Example 2

The positive electrode active material for a lithium secondary battery in which lithium niobate (LiNbO₃) is formed as a surface coating layer was prepared as in Example 1, except that the coating solution was prepared so that the niobium compound was comprised in an amount of 1.2 wt% based on the total weight of the solids in the positive electrode active material dispersion.

### Comparative Examples 1 to 7

The positive electrode active material for a lithium secondary battery was prepared as in Example 1, except that the solids content in the positive electrode active material dispersion, the content of the niobium-based compound in the coating solution, and the content of the aqueous solvent to be added were adjusted as shown in Table 1 below.

**[Table 1]**

| | **Solids (%)** | **Niobium-based compound content (wt%)** | **Aqueous solvent content (wt%)** |
|---|---|---|---|
| | **(compared to the total weight of the positive electrode active material dispersion)** | **(compared to the total weight of solids)** | **(compared to the total weight of solids)** |
| **Example 1** | **50** | **1.0** | **1.34** |
| **Example 2** | **50** | **1.2** | **1.34** |
| **Comp. Example 1** | **50** | **1.0** | **-** |
| **Comp. Example 2** | **50** | **1.4** | **1.34** |
| **Comp. Example 3** | **50** | **1.0** | **1.1** |
| **Comp. Example 4** | **50** | **1.0** | **1.6** |
| **Comp. Example 5** | **60** | **1.0** | **1.34** |
| **Comp. Example 6** | **70** | **1.0** | **1.34** |
| **Comp. Example 7** | **80** | **1.0** | **1.34** |

### Experimental Example 1: Confirmation of surface characteristics of positive electrode active material

### (1) Evaluation of SEM images

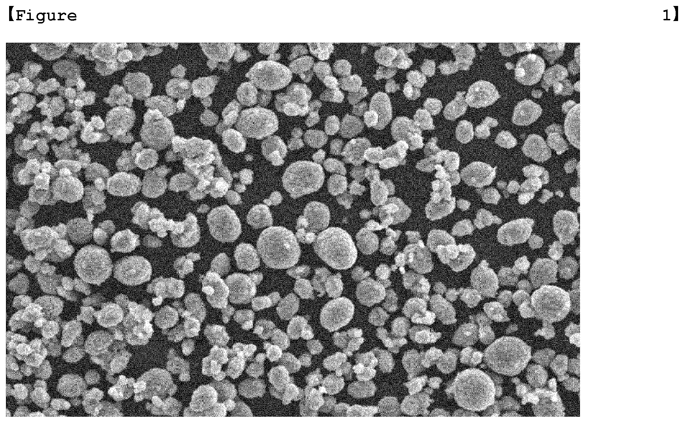

Particle samples of the positive electrode active material for a lithium secondary battery prepared according to Example 1, Comparative Example 1, Comparative Example 3, and Comparative Example 7 were obtained to confirm the surface characteristics of the positive electrode active material by scanning electron microscopy (SEM) analysis, and the results are shown in FIGS. 1 to 4.

Referring to FIG. 1, in the positive electrode active material according to Example 1, it can be seen that the surface of the positive electrode active material was uniformly coated with a niobium-based compound by further adding an aqueous solvent before adding a coating solution of the niobium-based compound to the positive electrode active material dispersion.

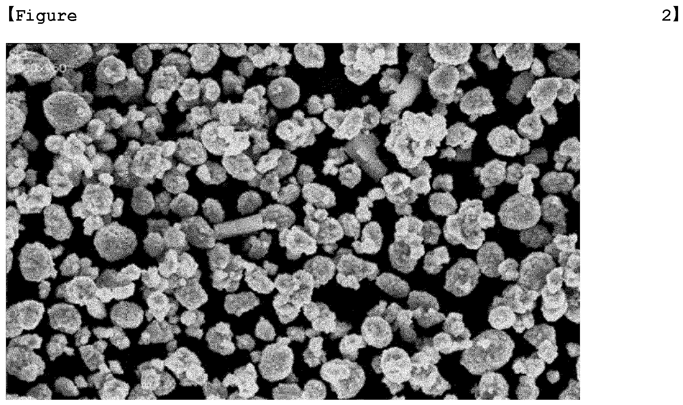

On the other hand, referring to FIG. 2, it can be seen that, in the positive electrode active material according to Comparative Example 1, since a separate aqueous solvent was not added during manufacturing the positive electrode active material, hydrophilic functional groups cannot be introduced to the surface of the positive electrode active material, and as a result, the niobium-based compound contained in the coating solution did not self-aggregate to form a uniform coating layer.

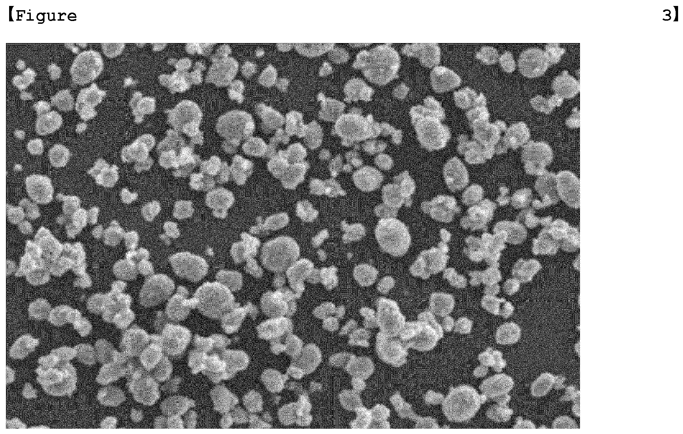

Referring to FIG. 3, it can be seen that, in the positive electrode active material according to Comparative Example 3, the niobium-based compound was not sufficiently introduced into the coating layer because the content of the aqueous solvent added during manufacturing the positive electrode active material was low, so that hydrophilic functional groups were not sufficiently introduced into the surface of the positive electrode active material.

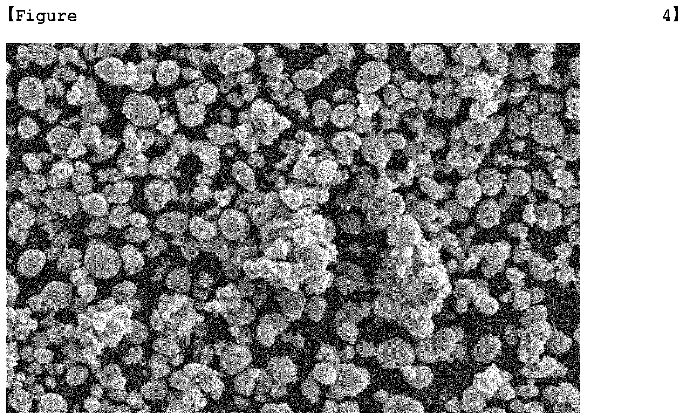

Referring to FIG. 4, it can be seen that, in the positive electrode active material according to Comparative Example 7, due to the excessive content of solids in the positive electrode active material dispersion, the surplus of the positive electrode active material that did not form a coating layer agglomerated together and appeared in the coating layer.

### (2) Evaluation of energy dispersive X-ray (EDX) images

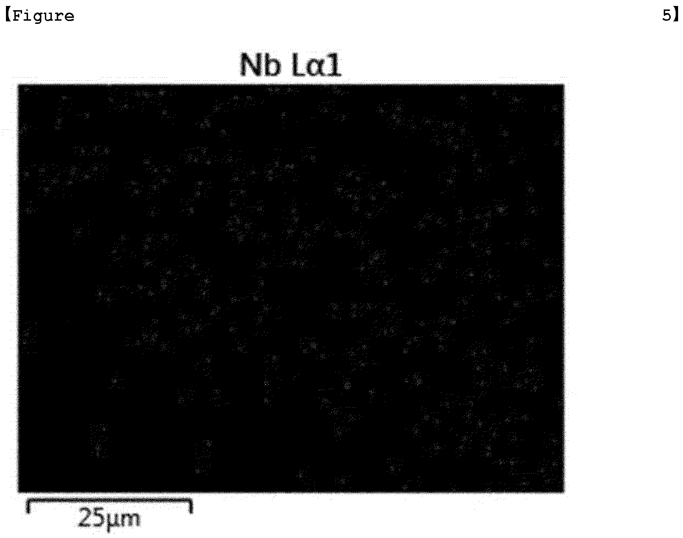

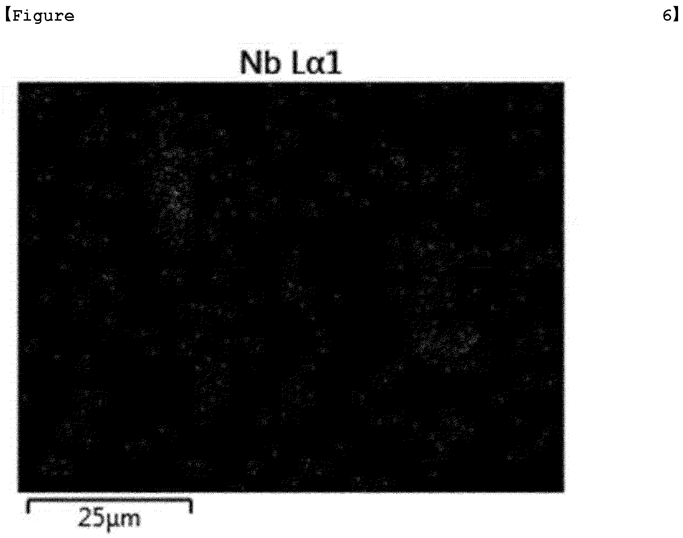

Energy dispersive X-ray (EDX) analysis of the positive electrode active material for a lithium secondary battery prepared according to Example 1 and Comparative Example 1 was performed to confirm the positive electrode active material surface characteristics, and the results are shown in FIGS. 5 and 6.

Referring to FIG. 5, it can be seen that, in the positive electrode active material for a lithium secondary battery prepared according to Example 1, hydrophilic functional groups were introduced to the surface of the positive electrode active material by further adding an aqueous solvent to the positive electrode active material dispersion before forming a coating layer of the niobium-based compound, so that the niobium-based compound indicated by red was uniformly coated on the surface of the positive electrode active material.

Referring to FIG. 6, it can be seen that, in the positive electrode active material for a lithium secondary battery prepared according to Comparative Example 1, by not adding a separate aqueous solvent to the positive electrode active material dispersion, hydrophilic functional groups were not introduced to the surface of the positive electrode active material, and the niobium-based compound indicated by red was not uniformly coated on the surface of the positive electrode active material.

### Experimental Example 2

All-solid-state batteries were prepared using the positive electrode active materials prepared in Example 1, Example 2, and Comparative Examples 1 to 7, respectively, and charge and discharge efficiency and lifetime characteristics for each was evaluated.

### (Manufacture of positive electrode)

First, a mixture was prepared such that the weight ratio of the positive electrode active material prepared according to Example 1, Example 2, and Comparative Examples 1 to 7, sulfide-based LPSCl (Li₆PS₅Cl manufactured by JeongKwan Co.Ltd) solid electrolyte, binder, and conductive material was 65:25:5:5. That is, based on 100 parts by weight of the positive electrode active material prepared according to Example 1, Example 2, and Comparative Examples 1 to 7, the mixture was prepared by mixing 38.46 parts by weight of the LPSCl solid electrolyte, 7.69 parts by weight of the NBR binder, and 7.69 parts by weight of the conductive material, Super-P. In this case, the NBR binder is a solution comprising nitrile butadiene rubber (NBR) and xylene, and the amount of NBR is 5 wt%. The NBR binder does not contain lithium salts.

Specifically, the positive electrode active material prepared according to Example 1, Example 2 and Comparative Examples 1 to 7, LPSCl solid electrolyte and Super-p were weighed in the above weight ratio, and then mixed for 30 minutes using a mortar to prepare a mixed powder. The mixed powder was transferred to a container for a thinky mixer, and the NBR binder was mixed with the above weight ratio, mounted on the mixer and mixed three times at 1,800 rpm for 5 minutes to prepare a mixture. Next, xylene was added to the mixture to adjust it to a suitable viscosity, zircon balls were added, and then the mixture was mixed at 1,800 rpm for 5 minutes to prepare a slurry. The slurry was cast onto aluminum foil and dried in a vacuum oven at 60 °C for 24 hours to prepare a positive electrode with a loading amount of 3 mg/cm².

### (Manufacture of solid electrolyte layer)

A mixture was prepared so that the weight ratio of Li₆PS₅Cl as a sulfide-based solid electrolyte and the binder was 70:30. That is, the mixture was prepared by mixing 42.9 parts by weight of polyethylene oxide (PEO) binder based on 100 parts by weight of Li₆PS₅Cl, a solid electrolyte. The PEO binder was prepared by mixing polyethylene oxide (PEO with a molecular weight of 200,000) and Li₆PS₅Cl in a molar ratio [EO]:[Li] of 15:1.

Specifically, the solid electrolyte Li₆PS₅Cl and the PEO binder were weighed in the above weight ratio, and then the mixture was prepared by stirring at 2,000 rpm for 5 minutes using a Thinky mixer.

Acetonitrile (ACN) was added to the mixture and stirred with a synchro mixer to adjust to have a suitable viscosity. Next, 2 mm zircon balls were added and stirred with a synchro mixer at 2,000 rpm for 5 minutes to prepare a slurry. The slurry was cast on a polyethylene terephthalate (PET) film and dried at room temperature to prepare a solid electrolyte layer with a thickness of 150 µm.

### (Manufacture of all-solid-state battery)

The prepared positive electrode and solid electrolyte layer were punched to a diameter of 14 cm or 16 cm, respectively, and then laminated. Next, the laminate was prepared by heating it to about 60°C and pressurizing it to 0.3 MPa for 0.5 minutes. A negative electrode comprising lithium metal was placed on the laminate to prepare an all-solid-state battery comprising the positive electrode active material of Example 1, Example 2, and Comparative Examples 1 to 7 using a 2032-size coin cell.

For each of the all-solid-state batteries of Example 1, Example 2, and Comparative Examples 1 to 7, a charge to 4.25V at 25°C with a 0.2C constant current was conducted, and a discharge to 3.0V with a 0.2C constant current was conducted, and the charge and discharge capacities in this first cycle were measured. The discharge capacities in the first cycle divided by the charge capacities in the first cycle multiplied by 100 are the charge and discharge efficiencies (%), and they are shown in Table 2 below.

Furthermore, for each of the all-solid-state batteries of Example 1, Example 2, and Comparative Examples 1 to 7, a 50-cycle charge and discharge at 1C/1C at 45 °C was performed, and then the 50-cycle discharge capacity retention rate (%) was calculated according to Equation 1 below and is shown in Table 2 below. 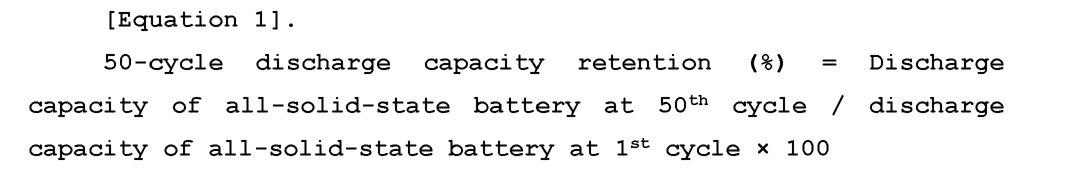 50-cycle discharge capacity retention (%) = Discharge capacity of all-solid-state battery at 50th cycle / discharge capacity of all-solid-state battery at 1st cycle × 100 [Equation 1].

**[Table 2]**

| | **Charging** | **Discharge** | **Efficiency** | **50^{th} cycle Life Characteristics** |
|---|---|---|---|---|
| | **(mAh/g)** | **(mAh/g)** | **(%)** | **(%)** |
| **Example 1** | **211.6** | **161.9** | **76.5** | **81.4** |
| **Example 2** | **210.3** | **158.1** | **75.2** | **78.3** |
| **Comp. Example 1** | **201. 6** | **146.6** | **72.7** | **67.2** |
| **Comp. Example 2** | **208.7** | **155.3** | **74.4** | **74.7** |
| **Comp. Example 3** | **208.1** | **153.2** | **73.6** | **73.5** |
| **Comp. Example 4** | **209.1** | **156.4** | **74.8** | **72.8** |
| **Comp. Example 5** | **210.0** | **160.0** | **76.2** | **76.4** |
| **Comp. Example 6** | **209.7** | **156.4** | **74.6** | **72.8** |
| **Comp. Example 7** | **201.4** | **147.2** | **73.1** | **71.1** |

Referring to Table 2 above, it can be seen that, in the all-solid-state battery having the positive electrode active material according to Examples 1 and 2, compared to the all-solid-state battery according to Comparative Examples 1 to 7, as a result of the introduction of hydrophilic functional groups on the surface of the positive electrode active material by introducing an aqueous solvent during the preparation of the positive electrode active material, a coating layer comprising a niobium-based compound was uniformly formed, and the reactivity of the coating layer with the sulfide-based solid electrolyte was suppressed, thereby improving the charge capacity and life characteristics of the all-solid-state battery.

From the above, the preferred embodiments of the present invention have been described in detail, but the scope of the present invention is not limited thereto, and various modifications and improvements by those skilled in the art utilizing the basic concepts of the present invention as defined in the following claims are also within the scope of the present invention.

## Claims

1. A method for manufacturing a positive electrode active material for a lithium secondary battery, comprising:
(a) preparing a positive electrode active material dispersion by mixing a positive electrode active material capable of reversible adsorption and release of lithium ions and a solvent;
(b) adding and mixing a raw coating material comprising lithium (Li) and niobium (Nb) to prepare a coating solution comprising a niobium-based compound;
(c) adding to the positive electrode active material dispersion of step (a), the coating solution of step (b) to form a coating layer on the surface of the positive electrode active material; and
(d) pressing filtering the product of step (c) to remove the solvent;

2. The method for manufacturing a positive electrode active material for a lithium secondary battery according to claim 1, wherein in step (a), the positive electrode active material capable of reversible adsorption and release of lithium ions and the organic solvent are mixed, and then an aqueous solvent was further added to the mixture.

3. The method for manufacturing a positive electrode active material for a lithium secondary battery according to claim 2, comprising introducing hydrophilic functional groups to the surface of the positive electrode active material by further adding the aqueous solvent.

4. The method for manufacturing a positive electrode active material for a lithium secondary battery according to claim 1, wherein the positive electrode active material dispersion comprises from 10 to 50 percent by weight of solids, based on the total weight thereof.

5. The method for manufacturing a positive electrode active material for a lithium secondary battery according to claim 1, wherein surface coating layer of the the positive electrode active material comprises 1.0 to 1.2 wt% of a niobium-based compound, based on the total weight of the solids in the positive electrode active material dispersion.

6. The method for manufacturing a positive electrode active material for a lithium secondary battery according to claim 2, wherein the aqueous solvent is added in an amount of 1.2 to 1.4 wt% based on the total weight of the solids in the positive electrode active material dispersion.

7. The method for manufacturing a positive electrode active material for a lithium secondary battery according to claim 1, wherein the pressing filtration is carried out at a pressure of 0.3 to 0.5 MPa.

8. The method for manufacturing a positive electrode active material for a lithium secondary battery according to claim 1, wherein the coating layer has a thickness of 10 to 30 nm.

9. The method for manufacturing a positive electrode active material for a lithium secondary battery according to claim 1, further comprising the step of drying the solvent-removed product at 80 to 120°C after step (d).

10. A positive electrode active material for a lithium secondary battery prepared by the method of manufacturing a positive electrode active material for a lithium secondary battery according to any one of claims 1 to 9.

## Patentansprüche

1. Verfahren zur Herstellung eines Positivelektrode-Aktivmaterials für eine Lithium-Sekundärbatterie, umfassend:
(a) Herstellen einer Positivelektrode-Aktivmaterialdispersion durch Mischen eines Positivelektrode-Aktivmaterials, das zur reversiblen Adsorption und Freisetzung von Lithiumionen fähig ist, und eines Lösungsmittels;
(b) Zugeben und Mischen eines Ausgangsbeschichtungsmaterials, das Lithium (Li) und Niob (Nb) enthält, um eine Beschichtungslösung herzustellen, die eine Verbindung auf Niobbasis umfasst;
(c) Zugeben der Beschichtungslösung von Schritt (b) zu der Positivelektrode-Aktivmaterialdispersion von Schritt (a), um eine Beschichtungsschicht auf der Oberfläche des Positivelektrode-Aktivmaterials zu bilden; und
(d) Pressfiltrieren des Produkts von Schritt (c), um das Lösungsmittel zu entfernen.

2. Verfahren zur Herstellung eines Positivelektrode-Aktivmaterials für eine Lithium-Sekundärbatterie nach Anspruch 1, wobei in Schritt (a) das Positivelektrode-Aktivmaterial, das zur reversiblen Adsorption und Freisetzung von Lithiumionen fähig ist, und das organische Lösungsmittel gemischt werden und dann ferner ein wässriges Lösungsmittel zu der Mischung gegeben wird.

3. Verfahren zur Herstellung eines Positivelektrode-Aktivmaterials für eine Lithium-Sekundärbatterie nach Anspruch 2, umfassend das Einführen hydrophiler funktioneller Gruppen in die Oberfläche des Positivelektrode-Aktivmaterials durch weiteres Zugeben des wässrigen Lösungsmittels.

4. Verfahren zur Herstellung eines Positivelektrode-Aktivmaterials für eine Lithium-Sekundärbatterie nach Anspruch 1, wobei die Positivelektrode-Aktivmaterialdispersion 10 bis 50 Gew.-% Feststoffe, bezogen auf ihr Gesamtgewicht, enthält.

5. Verfahren zur Herstellung eines Positivelektrode-Aktivmaterials für eine Lithium-Sekundärbatterie nach Anspruch 1, wobei die Oberflächenbeschichtungsschicht des Positivelektrode-Aktivmaterials 1,0 bis 1,2 Gew.-% einer Verbindung auf Niobbasis, bezogen auf das Gesamtgewicht der Feststoffe in der Positivelektrode-Aktivmaterialdispersion, enthält.

6. Verfahren zur Herstellung eines Positivelektrode-Aktivmaterials für eine Lithium-Sekundärbatterie nach Anspruch 2, wobei das wässrige Lösungsmittel in einer Menge von 1,2 bis 1,4 Gew.-%, bezogen auf das Gesamtgewicht der Feststoffe in der Positivelektrode-Aktivmaterialdispersion, zugegeben wird.

7. Verfahren zur Herstellung eines Positivelektrode-Aktivmaterials für eine Lithium-Sekundärbatterie nach Anspruch 1, wobei die Pressfiltration bei einem Druck von 0,3 bis 0,5 MPa durchgeführt wird.

8. Verfahren zur Herstellung eines Positivelektrode-Aktivmaterials für eine Lithium-Sekundärbatterie nach Anspruch 1, wobei die Beschichtungsschicht eine Dicke von 10 bis 30 nm aufweist.

9. Verfahren zur Herstellung eines Positivelektrode-Aktivmaterials für eine Lithium-Sekundärbatterie nach Anspruch 1, ferner umfassend den Schritt des Trocknens des lösungsmittelentfernten Produkts bei 80 bis 120°C nach Schritt (d).

10. Positivelektrode-Aktivmaterial für eine Lithium-Sekundärbatterie, hergestellt durch das Verfahren zur Herstellung eines Positivelektrode-Aktivmaterials für eine Lithium-Sekundärbatterie nach einem der Ansprüche 1 bis 9.

## Revendications

1. Procédé de fabrication d'un matériau actif d'électrode positive pour une batterie rechargeable au lithium, consistant à :
(a) préparer une dispersion de matériau actif d'électrode positive en mélangeant un matériau actif d'électrode positive apte à une adsorption réversible et une libération d'ions lithium et un solvant ;
(b) ajouter et mélanger un matériau de revêtement brut comprenant du lithium (Li) et du niobium (Nb) pour préparer une solution de revêtement comprenant un composé à base de niobium ;
(c) ajouter à la dispersion de matériau actif d'électrode positive de l'étape (a), la solution de revêtement de l'étape (b) pour former une couche de revêtement sur la surface du matériau actif d'électrode positive ; et
(d) filtrer par pressage le produit de l'étape (c) pour retirer le solvant.

2. Procédé de fabrication d'un matériau actif d'électrode positive pour une batterie rechargeable au lithium selon la revendication 1, dans lequel à l'étape (a), le matériau actif d'électrode positive apte à une adsorption réversible et une libération des ions de lithium et le solvant organique sont mélangés, puis un solvant est en outre ajouté au mélange.

3. Procédé de fabrication d'un matériau actif d'électrode positive pour une batterie rechargeable au lithium selon la revendication 2, consistant à introduire des groupes fonctionnels hydrophiles à la surface du matériau actif d'électrode positive en ajoutant en outre le solvant aqueux.

4. Procédé de fabrication d'un matériau actif d'électrode positive pour une batterie rechargeable au lithium selon la revendication 1, dans lequel le dispersion de matériau actif d'électrode positive comprend de 10 à 50 pour cent en poids de solides, sur la base de son poids total.

5. Procédé de fabrication d'un matériau actif d'électrode positive pour une batterie rechargeable au lithium selon la revendication 1, dans lequel une couche de revêtement de surface du matériau actif d'électrode positive comprend 1,0 à 1,2 % en poids d'un composé à base de niobium, sur la base du poids total des solides dans la dispersion de matériau actif d'électrode positive.

6. Procédé de fabrication d'un matériau actif d'électrode positive pour une batterie rechargeable au lithium selon la revendication 2, dans lequel le solvant aqueux est ajouté dans une quantité de 1,2 à 1,4 % en poids sur la base du poids total des solides dans la dispersion de matériau actif d'électrode positive.

7. Procédé de fabrication d'un matériau actif d'électrode positive pour une batterie rechargeable au lithium selon la revendication 1, dans lequel la filtration sous pressage est effectuée à une pression de 0,3 à 0,5 MPa.

8. Procédé de fabrication d'un matériau actif d'électrode positive pour une batterie rechargeable au lithium selon la revendication 1, dans lequel la couche de revêtement a une épaisseur de 10 à 30 nm.

9. Procédé de fabrication d'un matériau actif d'électrode positive pour une batterie rechargeable au lithium selon la revendication 1, comprenant en outre l'étape de séchage du produit retiré par solvant de 80 à 120°C après l'étape (d).

10. Matériau actif d'électrode positive pour une batterie rechargeable au lithium préparé par le procédé de fabrication d'un matériau actif d'électrode positive pour une batterie rechargeable au lithium selon l'une quelconque des revendications 1 à 9.
